# EUROPÄISCHE PATENTSCHRIFT

(11) **EP 3 290 365 B1**
(45) Veröffentlichungstag und Bekanntmachung des Hinweises auf die Patenterteilung: **27.05.2020**
(21) Anmeldenummer: 17188651.8
(22) Anmeldetag: 30.08.2017
(51) Int. Cl.: B65G 47/91, B26D 7/01

(54) **SAUGGREIFER UND VERFAHREN ZUM GREIFEN ELASTISCHER SCHEIBEN**
SUCTION GRIPPER AND METHOD FOR GRIPPING ELASTIC DISCS
ARAIGNÉE À VENTOUSES ET PROCÉDÉ DE DISQUES DE RECTIFICATION DU PULVÉRISAGE À DISQUE ÉLASTIQUE

(30) Priorität: 30.08.2016 DE 102016216349
(43) Veröffentlichungstag der Anmeldung: 07.03.2018
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- EP-B1- 2 842 703
- DE-A1-102013 009 344
- DE-A1-102014 204 293
- DE-U1- 9 103 983
- GB-A- 2 062 585
- JP-A- 2015 062 939
- JP-A- 2015 062 940
- US-A- 3 595 562
- US-A- 4 690 393
- US-A1- 2001 046 435

## Beschreibung

Die vorliegende Erfindung betrifft einen Sauggreifer, der insbesondere zur Verwendung als Greifer für elastische Scheiben und/oder als Vereinzelungsvorrichtung für elastische Scheiben von einem Scheibenstapel geeignet ist, sowie ein Verfahren zum Greifen und Vereinzeln elastischer Scheiben von einem Scheibenstapel, insbesondere mittels des Sauggreifers.

Der Sauggreifer und das Verfahren erlauben ein Abheben einer elastischen Scheibe von einem Scheibenstapel auch, wenn die Scheiben aneinander haften. Bevorzugt sind die Scheiben Lebensmittelscheiben, z.B. protein- und fetthaltige Lebensmittelscheiben mit feuchter Oberfläche, insbesondere Wurst- oder Käsescheiben. Die Erfindung betrifft auch ein Verfahren zur Herstellung zusammengesetzter Lebensmittel, bei dem zumindest eine elastische Scheibe, insbesondere genau eine Scheibe, eines Lebensmittels mit dem Sauggreifer von einem Scheibenstapel vereinzelt wird und bewegt wird, wobei die Scheibe Bestandteil des Lebensmittels wird.

### Stand der Technik

Die US 3,595,562 A beschreibt zum Greifen von Polyethylenfolien eine Saugglocke nach dem Oberbegriff des Anspruchs 1, mit einer koaxial darin festgelegten Nadel, durch die Luft zwischen eine oben liegende Scheibe und die angrenzende Scheibe eines Stapels gedrückt werden kann.

Die JP 2015062939 A beschreibt nach der englischen Computerübersetzung einen Sauggreifer zum Vereinzeln von Metallplatten von einem Stapel, bei dem koaxial in einer Saugglocke ein Röhrchen fixiert ist, dessen elastisches Ende passend zur Bohrung einer Metallplatte ausgerichtet wird und durch eine Bohrung einer obersten Metallplatte angeordnet wird, um durch die Bohrung Gas zwischen zwei Platten zu drücken, während die oberste Platte mittels anliegenden Unterdrucks angehoben wird.

Die der JP 2015062940 A zeigt ausweislich der englischen Computerübersetzung zum Vereinzeln von Metallplatten von einem Stapel Saugglocken und bewegliche Stifte, die durch Bohrungen in der obersten Metallplatte gedrückt werden können.

Die US 2001/0046435 A1 beschreibt zum Trennen von gestapelten Siliciumwafern eine Saugglocke, die auf den obersten Siliciumwafer aufgesetzt wird und zum Trennen der Siliciumwafer mit Druckgas beaufschlagbare Röhrchen, die gegen den Umfang des Siliciumwafers gerichtet sind, um das Gas zwischen zwei Wafer zu drücken, ohne diese zu berühren.

Die GB 2062585 A beschreibt zum Trennen von Stofflagen hohle Nadeln, die einander gegenüber schräg zur Senkrechten beweglich sind und durch eine Stofflage bewegt werden, um Gas zwischen zwei Stofflagen zu drücken. Die obere Stofflage hängt nur an den überkreuzten Nadeln. Dabei soll ausdrücklich der Widerstand gegen das Trennen von einzelnen Lagen durch die Einwirkung von Vakuum und gegen statische Elektrizität ausgeschlossen werden.

US 4,690,393 A beschreibt zum Vereinzeln von Stofflagen einen Zylinder, an dem parallel zur Längsachse des Zylinders ein Stab mit Nadeln angeordnet ist, der mittels eines Zylinders um seine Drehachse geschwenkt werden kann. Dieses Verschwenken der Nadeln soll zu einem Eingreifen in die oberste Gewebelage führen. Dabei ragen die Nadeln maximal um die halbe Dicke des Gewebes über den Zylinder. Etwa senkrecht zu den Nadeln können Luftöffnungen in dem kippbaren Stab angeordnet sein, die dann Luft ausblasen, wenn die oberste Stofflage an der am Stab fixierten Nadel hängt, wobei der Luftstrom dann senkrecht zu den Nadeln strömt.

Die DE 9103983 U1 beschreibt eine Saugglocke zum Anheben einer Papierrolle, die zentral einen Stempel aufweist, der zum Abdichten der Öffnung der Hülse aufgesetzt wird, um die die Papierrolle aufgewickelt ist.

Die DE 10 2013 009 344 A1 beschreibt eine Saugglocke mit einer konkaven Innenwand, die eine Vielzahl von Löchern aufweist.

Die EP 2842703 B1 beschreibt eine Saugglocke, in der ein Anlageelement mit Bohrungen verschieblich geführt ist, wobei das Anlageelement in einer Stellung innerhalb der Saugglocke festlegbar ist. In der Saugglocke kann ein Abblasrohr festgelegt sein, das sich bis in die Ebenen der Öffnung der Saugglocke erstreckt.

Die EP 2842703 B1 beschreibt für einen Sauggreifer ein innerhalb der Saugglocke angeordnetes Abblasrohr, das in der Ebene der Öffnung der Saugglocke münden kann und das mit einer Druckluftquelle verbunden werden kann.

Bekannt ist, elastische Lebensmittelscheiben, die aneinander haften, direkt oder mit einem Besteck per Hand von einem Scheibenstapel abzunehmen.

### Aufgabe der Erfindung

Die Aufgabe der Erfindung liegt darin, eine alternative Vorrichtung und ein alternatives Verfahren zum Greifen und Vereinzeln elastischer Scheiben von einem Scheibenstapel bereitzustellen, das bevorzugt automatisierbar ist.

### Beschreibung der Erfindung

Die Erfindung löst die Aufgabe mit den Merkmalen des Anspruchs 1, mit einem Sauggreifer, der als Vereinzelungsvorrichtung für elastische Scheiben, die vorzugsweise aneinander haften, wie z.B. Lebensmittelscheiben, verwendbar ist. Der Sauggreifer weist eine Saugglocke auf, die zum gesteuerten Beaufschlagen mit Unterdruck mit einer Unterdruckquelle verbindbar ist. Die Saugglocke weist zumindest eine Saugöffnung auf, die von der Saugglocke eingefasst wird, optional zumindest zwei Saugöffnungen, die von der Saugglocke einfasst werden. Die zumindest eine Saugöffnung kann in der Saugglocke in einer Ebene angeordnet sein, oder in einer zumindest teilweise zylindrischen Wand. Die Saugglocke kann als ein mit der Hand zu führendes Gerät ausgebildet sein, z.B. zur Verwendung als Vereinzelungs- und Transportgerät für Lebensmittelscheiben, die von einem Stapel genommen und als Teil eines Lebensmittel zu einem Anteil dieses Lebensmittels bewegt und zusammengesetzt werden. Die Saugglocke ist optional an einer Bewegungseinrichtung, z.B. einem Roboterarm, angebracht, die gesteuert ist, die Saugglocke in Beziehung zu einem Träger und/oder einem Scheibenstapel in eine erste Stellung und in eine davon beabstandete zweite Stellung zu bewegen. Bevorzugt weist die Vorrichtung, die den Sauggreifer umfasst, einen Träger zum Tragen des Scheibenstapels auf, von dem eine Scheibe, insbesondere genau eine oder eine bestimmte Anzahl von Scheiben abgenommen werden soll. Die zweite Stellung ist diejenige, in der die vom Sauggreifer aufgenommene Scheibe abgelegt wird, z.B. bei der Herstellung eines zusammengesetzten Lebensmittels auf einen Anteil dieses Lebensmittels. So kann der Sauggreifer eine Bewegungseinrichtung aufweisen, die gesteuert ist, die Saugglocke in eine erste Position zu bewegen, in der die Saugglocke vom Träger in einem Abstand angeordnet ist, der von einem Scheibenstapel ausgefüllt ist. Dabei ist Scheibenstapel z.B. auf einem Träger angeordnet, der in der ersten Stellung angeordnet ist, und die zweite Stellung liegt in Bezug zum Träger in einem Abstand von der ersten Stellung.

Die Unterdruckquelle kann eine Einrichtung zur Erzeugung von Unterdruck sein, die bevorzugt durch ein Druckgas angetrieben ist.

Der Sauggreifer zeichnet sich durch ein Rohr aus, das die Ebene der Saugöffnung überragt, und mit Druckgas beaufschlagt werden kann. Das Rohr ist hohl und ist eingerichtet, gesteuert Druckgas zu führen. Zur gesteuerten Führung von Druckgas kann das Rohr mit einer Zuführleitung für Druckgas verbunden sein, wobei in der Zuführleitung ein Ventil angeordnet ist. Das Ventil kann manuell oder automatisch zu betätigen sein. Dieses Rohr erlaubt, während des Verfahrens Druckgas in den Bereich zu pressen, in dem zwei Scheiben aneinander anliegen, insbesondere die oberste Scheibe eines Stapels und die daran angrenzende Scheibe, z.B. zwischen die oberste Scheibe eines Stapels und die daran angrenzende Scheibe. Dieses Pressen von Druckgas zwischen zwei Scheiben führt zu einer teilweisen Trennung der aneinander anliegenden Scheiben, wobei sich die oberste Scheibe bei Anliegen der Saugöffnung am Scheibenstapel in die Saugöffnung bewegen kann. Die teilweise Trennung der zwei Scheiben führt bei Beaufschlagen der Saugglocke mit Unterdruck zum Ansaugen nur der Scheiben, die durch das eingepresste Druckgas von den anderen Scheiben zumindest teilweise getrennt ist, insbesondere nur der einen obersten Scheibe.

Generell bevorzugt ist der Sauggreifer eingerichtet, dass bei Auflegen der Saugglocke auf einen Scheibenstapel das Ende des Rohrs durch die oberste Scheibe ragt bzw. durch die oberste Scheibe gedrückt wird, so dass das Rohr zwischen der obersten und der angrenzenden Scheibe mündet und das Druckgas durch das Rohr zwischen die oberste Scheibe und die angrenzende Scheibe gepresst werden kann. Der Sauggreifer, der zur Verwendung als Vereinzelungsvorrichtung für elastische Scheiben von einem Scheibenstapel geeignet ist, ist mit einer Saugglocke mit zumindest einer Saugöffnung und mit einem gesteuert mit einer Druckgasquelle verbundenen Rohr versehen, wobei die Saugglocke gesteuert mit einer Unterdruckquelle verbunden ist, und wobei das Rohr die Ebene der Saugöffnung um die Dicke zumindest einer Scheibe oder um die Dicke genau einer Scheibe, z.B. 0,2 bis 10 mm, überragt.

Zusätzlich dazu, dass das Rohr die Ebene der Saugöffnung um die Dicke einer Scheibe überragt, kann das Rohr einen Anschlag in der Ebene der Saugöffnung aufweisen, wobei das Rohr den Anschlag um die Dicke zumindest einer Scheibe oder um die Dicke genau einer Scheibe, z.B. 0,2 bis 10 mm, überragt.

Vorteilhafter Weise ist die Saugglocke angrenzend an die Saugöffnung in einer Ebene angeordnet, so dass die Saugöffnung von einem Rand in einer Ebene eingefasst ist, so dass der Rand vollständig umlaufend an der obersten Scheibe anliegt, wenn die Saugglocke in die erste Stellung bewegt ist, bzw. gegen die Scheibe angeordnet ist.

Das Rohr ragt über die Ebene der Saugöffnung , so dass das Rohr bei Bewegen der Saugglocke in die erste Stellung, insbesondere bei Anliegen der Saugglocke an der obersten Scheibe, durch die oberste Scheibe gedrückt wird, so dass die Mündung des Rohrs unterhalb der obersten Scheibe, insbesondere zwischen der obersten und der angrenzenden Scheibe angeordnet wird. Dabei kann die Mündung des Rohrs abgeschrägt sein. Dies hat den Vorteil, dass die Mündung den Grenzbereich, in dem zwei Scheiben aneinanderliegen, überstreicht und Druckgas in diesen Bereich einführt, so dass diese beiden Scheiben teilweise getrennt werden.

Bevorzugt weist das Rohr einen Anschlag auf, der sich vom Umfang des Rohrs weg erstreckt, und das Rohr ist in der Ausführungsform bündig mit dem Anschlag, in der es auf der obersten Scheibe aufliegen soll, oder das Rohr ragt in der Ausführungsform, in der es durch die oberste Scheibe gedrückt wird, über den Anschlag, insbesondere um die Dicke der einen Scheibe oder der Anzahl der Scheiben, die vom Stapel abgenommen und in die zweite Stellung bewegt werden.

Der Sauggreifer weist bevorzugt eine Steuerungseinheit auf, die eingerichtet ist, das Rohr mit Druckgas zu beaufschlagen, wenn die Saugglocke in der ersten Stellung ist. Die Steuerungseinheit ist auch eingerichtet, die Saugglocke mit Unterdruck zu beaufschlagen, wenn die Saugglocke in der ersten Stellung ist, so dass die Scheibe, die durch das eingepresste Druckgas von einer angrenzenden Scheibe anteilig getrennt wird, von der Saugglocke angesaugt wird. Dabei kann die Steuerungseinheit eingerichtet sein, das Rohr mit Druckgas zu beaufschlagen und erst mit einer zeitlichen Verzögerung, z.B. von 10 bis 100 ms, die Saugglocke mit Unterdruck zu beaufschlagen. Alternativ kann die Steuerungseinheit eingerichtet sein, gleichzeitig das Rohr mit Druckgas und die Saugglocke mit Unterdruck zu beaufschlagen. Denn es hat sich gezeigt, dass Lebensmittelscheiben beim Einpressen von Druckgas in die Grenzschicht zwischen zwei aufeinanderliegenden Scheiben durch das Druckgas voneinander teilweise getrennt werden, bevor das Druckgas vom Unterdruck durch die oberste Lebensmittelscheibe gesogen wird. Weiter alternativ kann die Steuerungseinheit eingerichtet sein, das Rohr erst mit einer zeitlichen Verzögerung, z.B. von 10 bis 100 ms, nach dem Beaufschlagen der Saugglocke mit Unterdruck mit Druckgas zu beaufschlagen. Diese Alternative hat den Vorteil, dass sich die Saugglocke z.B. mit ihrem Rand, der die Saugöffnung umfasst, durch den Unterdruck an die oberste Scheibe anlegt.

Generell kann die Steuerungseinheit durch ein manuelles Signal, z.B. einen manuell zu betätigenden Schalter, der insbesondere ein Druckschalter ist, zum Beaufschlagen des Rohrs mit Druckgas und Beaufschlagen der Saugglocke mit Unterdruck ausgelöst werden oder gesteuert werden, oder in Abhängigkeit von der Position der Saugglocke in der ersten oder zweiten Stellung.

Das Rohr kann in der Ausführungsform, in der es in der Ebene der Saugöffnung mündet, einen Querschnitt von z.B. 1 bis 20 % der Querschnittsfläche der Saugöffnungen haben. In der Ausführungsform, in der das Rohr über die Ebene der Saugöffnung ragt, kann das Rohr einen Querschnitt von z.B. 0,5 bis 2 mm, z.B. 0,9 mm haben.

Erfindungsgemäß ist das Rohr innerhalb der Saugglocke mit einer Verstelleinrichtung zur Verstellung des Rohrs festgelegt, um dessen Mündung in die Ebene der Saugöffnung bzw. über die Ebene der Saugöffnung hinaus zu bewegen und festzulegen. Eine solche Verstelleinrichtung ist eingerichtet, das Rohr nur bei Beaufschlagung mit Druckgas in eine Lage zu bewegen, in der die Mündung des Rohrs über die Ebene der Saugöffnung hinaus ragt und in Abwesenheit der Druckgasbeaufschlagung das Rohr zurückzubewegen, insbesondere in die Saugglocke. Die Verstelleinrichtung kann z.B. ein Pneumatikzylinder sein, der gegen eine Feder wirkt und bei Beaufschlagung mit Druckgas das Rohr verschiebt, bis dessen Mündung über die Ebene der Saugöffnung hinaus ragt. Dadurch kann der Sauggreifer eingerichtet bzw. gesteuert sein, dass das Rohr bei dessen Beaufschlagung mit Druckgas mittels der Verstelleinrichtung in eine Lage beweglich ist, in der die Mündung des Rohrs über die Ebene der Saugöffnung hinaus ragt, mit oder ohne Anschlag am Rohr, und in Abwesenheit der Druckgasbeaufschlagung das Rohr aus dieser Lage zurück beweglich ist, z.B. durch eine Feder in diese Lage belastet ist. Bevorzugt ist der Pneumatikzylinder an dieselbe Druckgasquelle und dieselbe Steuerungseinheit wie das Rohr angeschlossen und wird mit demselben Druckgas bzw. gleichzeitig beaufschlagt, wie das Rohr.

Generell ist bevorzugt, die Bewegungseinrichtung nach dem Beaufschlagen der Saugglocke mit Unterdruck und nach dem Beaufschlagen des Rohrs mit Druckgas gesteuert in die zweite Stellung zu bewegen. Nach Bewegen der Saugglocke aus der ersten Stellung kann das Rohr weiterhin mit Druckgas beaufschlagt werden, bevorzugt wird das Druckgas dann unter Steuerung durch die Steuerungseinheit abgestellt.

In der zweiten Stellung wird bevorzugt der Unterdruck aufgehoben, z.B. durch Abstellen oder Trennen der Unterdruckquelle von der Saugglocke oder durch Öffnen einer Belüftungsöffnung in der Saugglocke.

Das Druckgas kann ein Schutzgas sein, z.B. CO₂ und/oder Stickstoff, um Mikroorganismen und Veränderungen der Lebensmittelscheiben zu verringern bzw. zu hemmen.

Die Bewegungseinrichtung ist bevorzugt ein zur Bewegung von der ersten in die zweite Position programmgesteuert angetriebener Robotorarm oder eine an einem Rahmen geführte Verfahreinrichtung.

Generell bevorzugt ist der Sauggreifer mit einer Kamera und rechnergesteuerten Positioniereinrichtung für die Bewegungseinrichtung verbunden, die eingerichtet sind, die Position der obersten Scheibe eines Scheibenstapels zu bestimmen und die Saugglocke in die erste Stellung zu bewegen, und sind eingerichtet, die Saugglocke anschließend in die zweite Stellung zu bewegen.

Die Saugglocke kann zwei oder mehr Saugöffnungen aufweisen, die z.B. von einem gemeinsamen Rand eingefasst sein können. Zwei oder mehr Saugöffnungen können in einer Ebene angeordnet sein oder in einer konkaven oder konvexen Fläche.

Zwei oder mehr Saugöffnungen können in einer konkaven Fläche angeordnet sein. Alternativ können zwei oder mehr Saugöffnungen in einer konvexen Fläche angeordnet sein, die zumindest anteilig eine Zylinderwand ist, z.B. bis zu 180° oder bis zu 90° oder bis 45° der Zylinderwand um die Zylinderachse umfasst. Eine solche Saugglocke ist bevorzugt an einer Bewegungseinrichtung angebracht und an dieser um seine Zylinderachse drehbar gelagert, optional drehbar angetrieben, und in der ersten Stellung senkrecht zur Zylinderachse geführt, um eine Abrollbewegung der Saugöffnungen entlang der ersten Stellung bzw. entlang der in der ersten Position angeordneten Scheibe auszuführen.

Zwei oder mehr Saugöffnungen, die in einer konvexen Fläche angeordnet sind, sind bevorzugt abhängig von der Stellung der Saugglocke, insbesondere abhängig von der Drehung der konvexen Fläche um ihre Zylinderachse, gesteuert mit Unterdruck beaufschlagt. Zur Steuerung der Beaufschlagung der Saugöffnungen mit Unterdruck können die Saugöffnungen durch eine Abdeckung oder durch Ventile verschlossen werden, die einen Abschnitt der konvexen Fläche abhängig von ihrer Drehung um die Zylinderachse überdeckt.

Generell kann angrenzend an eine Saugöffnung oder in oder über einer Saugöffnung ein Auswerfer angeordnet sein, der bei anliegendem Unterdruck gegen die Saugglocke bewegt wird, z.B. durch eine angesaugte Scheibe, und sich bei Abstellen des Unterdrucks über die Ebene der Saugöffnung bewegt, z.B. federbelastet ist. Alternativ zu einem mechanischen Auswerfer, der gegen eine angesaugte Scheibe bzw. gegen die Öffnung der Saugglocke federbelastet ist, kann der Auswerfer eine Druckgaszufuhr sein, die steuerbar ist, z.B. manuell oder von einer Steuerungseinrichtung, um Druckgas in die Saugglocke strömen zu lassen, wenn die Saugglocke in der zweiten Stellung ist.

Generell bevorzugt ist die Saugglocke mit einer Einrichtung zur Erzeugung von Unterdruck ausgestattet, die durch Druckgas, z.B. Druckluft, angetrieben ist. Eine solche Einrichtung kann z.B. eine durch Druckgas angetriebene Venturidüse oder Strahlpumpe sein, die mit dem antreibenden Druckgas Luft ansaugt und dadurch Unterdruck erzeugt. Eine Strahlpumpe kann z.B. eine sein, die nach dem Venturi- oder nach dem Bernoulli-Prinzip arbeitet.

In Ausführungsformen, in der das Rohr und die Einrichtung zur Erzeugung von Unterdruck und/oder ein Auswerfer mit Druckgas beaufschlagbar ist, weist der Sauggreifer bevorzugt nur einen Anschluss für eine gemeinsame Druckgasleitung auf.

Das Rohr kann verschieblich an der Saugglocke geführt sein, bevorzugt mit einem Antrieb, der das Rohr bei anliegendem Druckgas über die Ebene der Saugöffnung hinaus bewegt, wobei der Antrieb in Gegenrichtung federbelastet ist, so dass ohne anliegendes Druckgas das Rohr hinter die Ebene der Saugöffnung, bevorzugt in die Saugglocke bewegt ist.

Bevorzugt ist das Rohr mittig in einer Saugöffnung angeordnet. Optional weist die Saugglocke zwei oder mehr Rohre auf, die voneinander beabstandet sind, vorzugsweise zueinander parallel zueinander, und sich in gleichem Maß relativ zur Ebene der Saugöffnung erstrecken, in der sie angeordnet sind.

Das erfindungsgemäße Verfahren kann ein Schritt in der Herstellung zusammengesetzter Lebensmittel sein, z.B. von mit Scheiben belegten Backwaren, insbesondere Brot, Pizza, Kuchen, Hamburger, Sandwiches und/oder vorgefertigte Brotbeläge aus zumindest zwei Scheiben, z.B. Cordon bleu und dergleichen.

Das Verfahren nach Anspruch 16 mit dem erfindungsgemäßen Sauggreifer zeichnet sich dadurch aus, dass zwischen zwei Scheiben, insbesondere zwischen die oberste Scheibe eines Stapels und die angrenzende Scheibe, durch ein Rohr Druckgas gepresst wird. Das zwischen zwei Scheiben gepresste Druckgas bewirkt eine teilweise Trennung der beiden Scheiben, so dass die an die Saugglocke angrenzende Scheibe, die die oberste Scheibe ist, mittels des Unterdrucks an die Saugglocke einzeln gesaugt wird, während die angrenzende Scheibe an dem restlichen Stapel haften bleibt.

Bei einem Scheibenstapel, dessen oberste Scheibe in einer ersten Position ist, wird die Saugglocke mit ihrer zumindest einen Saugöffnung in eine erste Stellung bewegt, in der die Saugöffnung an der obersten Scheibe bzw. gegen die erste Position anliegt. In der ersten Stellung wird das Rohr, das sich über die Ebene der Saugöffnung hinaus erstreckt, durch die oberste Scheibe gedrückt bzw. gestochen, so dass dessen Mündung unterhalb der obersten Scheibe, bevorzugt zwischen der obersten und der angrenzenden Scheibe, mündet. Beim Beaufschlagen des Rohrs mit Druckgas tritt das Druckgas durch die oberste Scheibe, wenn die Mündung des Rohrs auf der obersten Scheibe aufliegt, bzw. das Druckgas wird direkt zwischen die oberste und die angrenzende Scheibe gepresst.

Nach Bewegen der Saugglocke mit deren zumindest einer Saugöffnung in die erste Stellung, in der die Saugöffnung an dem Scheibenstapel anliegt, wird in der ersten Stellung das Rohr gesteuert mit Druckgas beaufschlagt,
und in der ersten Stellung wird die Saugglocke mit Unterdruck beaufschlagt. Das Beaufschlagen der Saugglocke mit Unterdruck kann vor dem, gleichzeitig mit dem oder nach dem Beaufschlagen des Rohrs mit Druckgas erfolgen, bevorzugt zumindest bis zum Beaufschlagen der Saugglocke mit Unterdruck, weiter bevorzugt zumindest bis zum Bewegen der Saugglocke aus der ersten Stellung. Das Beaufschlagen des Rohrs mit Druckgas und das Beaufschlagen der Saugglocke mit Unterdruck erfolgt gesteuert durch eine Steuerungseinheit, insbesondere abhängig von der Bewegung der Saugglocke in die erste Stellung und/oder abhängig von der Positionierung der Saugglocke in der ersten Stellung. Anschließend wird die Saugglocke in eine zweite Stellung bewegt, während die Saugglocke bis zum Erreichen der zweiten Stellung mit Unterdruck beaufschlagt wird. In der zweiten Stellung wird der Unterdruck aufgehoben, um die Scheibe von der Saugglocke abfallen zu lassen. Generell bevorzugt kann die Öffnung der Saugglocke in der ersten Stellung und in der zweiten Stellung waagerecht angeordnet sein, und die Scheibe liegt in der ersten Position waagerecht.

Das Beaufschlagen des Rohrs mit Druckgas kann beendet werden, sobald die Saugglocke nach dem Beaufschlagen des Rohrs mit Druckgas mit Unterdruck beaufschlagt wird. So kann das Rohr nach Beaufschlagen der Saugglocke mit Unterdruck nicht weiter mit Druckgas beaufschlagt werden, bzw. die Beaufschlagung des Rohrs mit Druckgas kann nach Beaufschlagen der Saugglocke mit Unterdruck beendet werden. Alternativ kann das Rohr durchgehend mit Druckgas beaufschlagt sein, bis in der zweiten Stellung der an der Saugglocke anliegende Unterdruck aufgehoben wird. Generell kann in der Ausführungsform, in der die Mündung des Rohrs auf der Scheibe aufliegt, das Druckgas bei Bewegen der Saugglocke aus der ersten Stellung abgestellt werden und optional das Rohr in der zweiten Stellung mit Druckgas beaufschlagt werden, wenn in der zweiten Stellung der Unterdruck an der Saugglocke abgestellt wird. Das Druckgas dient dann zur Unterstützung des Abwerfens der an der Saugglocke angesaugten Scheibe, wenn der Unterdruck abgestellt wird. Beim Abwerfen der Scheibe in der zweiten Stellung des Sauggreifers kann ein Auswerfer, der insbesondere am Rand der Saugöffnung angelenkt ist und/oder über die Saugöffnung ragt, die Scheibe in Richtung von der Saugglocke weg belasten. Bevorzugt ist ein Auswerfer in Richtung von der Saugglocke weg federbelastet.

In Ausführungsformen der Saugglocke mit zumindest zwei Saugöffnungen werden diese bevorzugt in Abhängigkeit von der Stellung der Saugglocke in der ersten oder zweiten Stellung gesteuert nacheinander mit Unterdruck beaufschlagt. Dazu können z.B. die beim Bewegen der Saugglocke in die erste Stellung und/oder beim Drehen einer Saugglocke, deren Saugöffnungen in einer Zylinderfläche angeordnet sind, um die Zylinderachse gesteuert nacheinander mit Unterdruck beaufschlagt werden. Auf diese Weise können die zumindest zwei Saugöffnungen erst dann mit Unterdruck beaufschlagt werden, wenn sie angrenzend an die oberste Scheibe in der ersten Stellung angeordnet sind, insbesondere abhängig von der Drehstellung um die Zylinderachse gesteuert.

Die Saugglocke kann ein Gehäuse bilden, in dem das Rohr angeordnet ist, bevorzugt abhängig vom Beaufschlagen des Rohrs mit Druckgas an einer Verstelleinrichtung verschieblich geführt ist. Bevorzugt ist das Gehäuse teilbar.

Die Erfindung wird nun genauer mit Bezug auf die Figuren beschrieben, die schematisch in
- Figur 1 einen Schnitt durch einen Sauggreifer,
- Figur 2 einen Schnitt durch eine Ausführungsform eines Sauggreifers,
- Figur 4 das Verfahren und

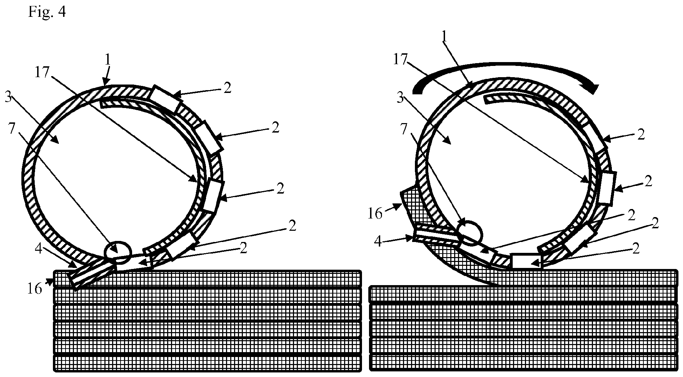

- Figur 4 eine weitere Ausführungsform eines Sauggreifers im Schnitt
zeigen.

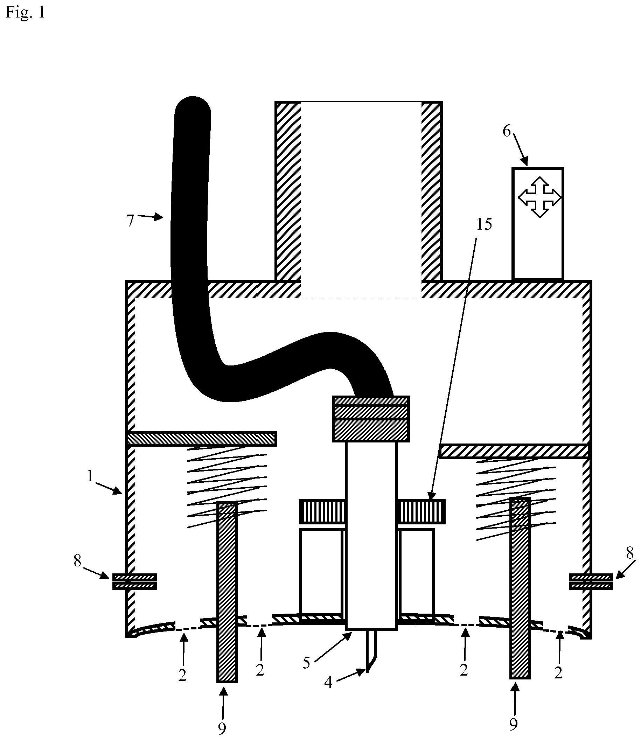

Die Fig. 1 zeigt einen Sauggreifer mit einer Saugglocke 1 mit Saugöffnungen 2, die mittels eines Stutzens 3 mit einer Unterdruckquelle zu verbinden ist. Das Rohr 4 weist eine angeschrägte Öffnung auf und ragt über die Ebene der Saugöffnungen 2. Das Rohr 4 ist mit einem Anschlag 5 versehen, der bevorzugt über die Ebene der Saugöffnung 2 ragt, beispielsweise in einen Bereich, der zwischen der Ebene der Saugöffnungen 2 und dem Rand der Saugglocke 1 liegt.

Die Saugglocke 1 ist mit einer Bewegungseinrichtung 6 verbunden, die die Saugglocke 1 in eine erste Stellung und eine zweite Stellung bewegt.

Das Rohr 4 ist mit einer Druckgasquelle verbunden, beispielsweise mittels einer Schlauchleitung 7. Entsprechend der bevorzugten Ausführungsform ist das Rohr 4 in der Saugglocke 1 geführt. Hier ist dargestellt, dass das Rohr 4 zwischen den Saugöffnungen 2 angeordnet ist, alternativ kann das Rohr 4 innerhalb einer Saugöffnung 2 angeordnet sein bzw. durch eine Saugöffnung 2 ragen. Die in Fig. 1 gezeigte Ausführungsform zeigt eine konkave Saugglocke 1, in der vier Saugöffnungen 2 angeordnet sind.

In der Ausführungsform von Figur 1 ist das Gehäuse der Saugglocke 1 aus zwei Teilen gebildet, die an Verschlüssen 8 miteinander verbindbar sind.

Die in Fig. 1 gezeigte Ausführungsform weist zwei federbelastete Auswerfer 9 auf, die bei Belastung in Richtung auf die Saugglocke 1 gegen die Federkraft belastet werden, sodass sie eine Scheibe 16, die gegen die Auswerfer 9 anliegt, bei Abstellen des Unterdrucks in der Saugglocke 1 von der Saugglocke 1 weg belasten.

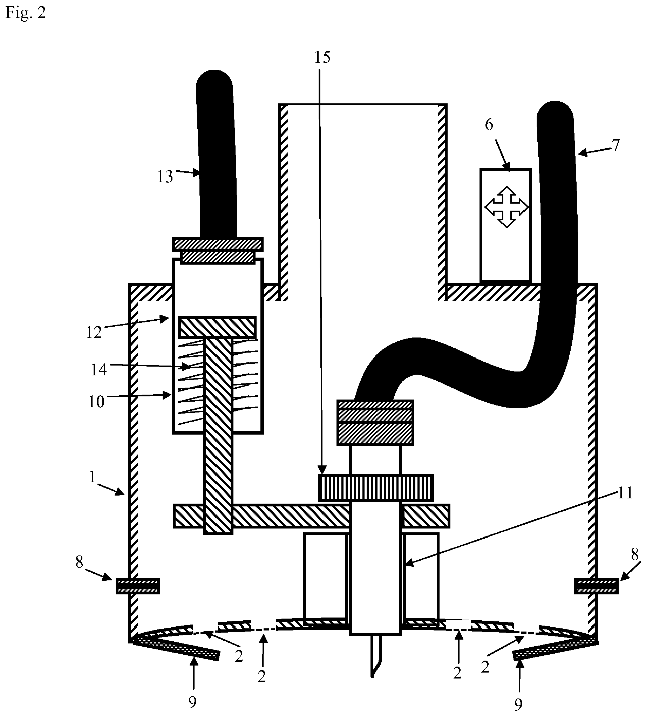

Fig. 2 zeigt eine Ausführungsform des Sauggreifers, bei der die Auswerfer 9 durch eine Federspannung von der Saugglocke 1 weg belastet werden und bei Belastung durch eine Scheibe, die die Saugglocke 1 überdeckt, gegen die Saugglocke 1 bzw. gegen die Saugöffnungen 2 gedrückt werden.

In dieser Ausführungsform ist das Rohr 4 mittels einer Verstelleinrichtung 10 beweglich in einer Führung 11 geführt, sodass das Rohr 4 durch die Verstelleinrichtung 10 in Richtung auf die Saugöffnungen 2 gesteuert bewegt wird, wenn das Rohr 4 mit Druckgas durch die Druckgasleitung 7 beaufschlagt wird. Dazu ist die Verstelleinrichtung 10 mit einem Pneumatikzylinder 12 versehen, der bei Beaufschlagung mit Druckgas durch eine Druckgasleitung 13 das Rohr 4 belastet und in Abwesenheit von Druckgas mittels einer Rückstellfeder 14 das Rohr 4 in die Saugglocke bewegt. In dieser Ausführungsform können die Druckgasleitung 7 für das Rohr 4 und die Druckgasleitung 13 für die Verstelleinrichtung 10 gleichzeitig mit Druckgas beaufschlagt werden, sodass das Rohr 4 nur bei Beaufschlagung mit Druckgas über die Saugglocke 1 bzw. über die Ebene der Saugöffnungen 2 ragt.

An der Justiereinrichtung 15, schematisch als Rändelschraube gezeigt, dient zur Einstellung des Rohrs 4 in Bezug zur Saugglocke 1 bzw. in Bezug zu Ebenen der Saugöffnungen 2.

Wie in Figur 2 gezeigt können die Auswerfer 9 gegen eine Saugöffnung 2 schwenkbar angeordnet sein, sodass eine an die Saugglocke 1 angesaugte Scheibe nicht unmittelbar an einer von mehreren Saugöffnungen 2 anliegt, sondern an einem Auswerfer 9, der bei Anliegen von Unterdruck an der Saugglocke 1 gegen eine von mehreren Saugöffnungen 2 gesaugt werden kann.

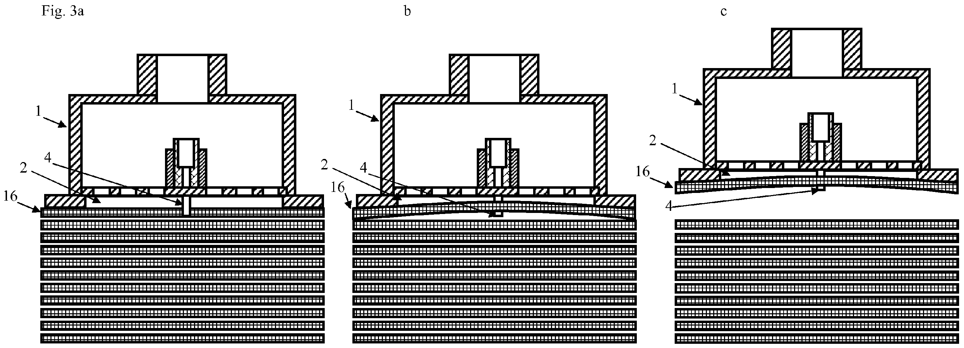

Die Figur 3 zeigt von links nach rechts Schritte des Verfahrens, bei dem eine Saugglocke 1 mit dem Rand ihrer Saugöffnung 2 auf der obersten Scheibe 16 eines Scheibenstapels aufliegt. In der hier im Schnitt gezeigten Saugglocke 1 wird die Saugöffnung 2 durch ein hinter der Ebene der Saugöffnung 2 gegen das Gitter überdeckt, gegen das die Scheibe 16 gezogen werden kann.

In dem hier gezeigten Verfahren ragt das Rohr 4 über die Ebene der Saugöffnung 2 und wird durch die oberste Scheibe 16 gedrückt, bis die Mündung des Rohrs 4 etwa im Zwischenraum zwischen der obersten Scheibe 16 und angrenzenden Scheibe angeordnet ist. Das Beaufschlagen des Rohrs 4 führt, Figur 3b, zu einer teilweisen Trennung bzw. Beabstandung der obersten Scheibe 16 von der angrenzenden, darunter liegenden Scheibe. Durch Beaufschlagen der Saugglocke 1 mit Unterdruck in einem der Stadien von Figur 3a oder 3b wird die oberste Scheibe 16 gegen die Saugöffnung 2 gesaugt, sodass entsprechend Figur 3c die Saugglocke 1 bei anliegendem Unterdruck aus der ersten Stellung vom Scheibenstapel weg bewegt werden kann.

Die Figur 4 zeigt eine Ausführungsform, bei der die Saugöffnungen 2 in einer konvexen Saugglocke 1 mit Zylinderform angeordnet sind. Die Saugglocke 1 ist gesteuert drehbar und entlang der ersten Stellung beweglich, in der die Saugglocke 1 an der obersten Scheibe 16 anliegt, sodass bei einer Drehung um die Zylinderachse und einer Bewegung entlang der Scheibe 16 die Saugöffnungen 2 nacheinander ohne Relativbewegung mit der Scheibe 16 in Kontakt kommen. Das Rohr 4 ist über eine Druckgasleitung 7 mit Druckgas beaufschlagbar und ragt über die Saugglocke 1 bis in die Grenzschicht, an der die Scheibe 16 an der nächsten angrenzenden Scheibe anliegt.

Die Saugöffnungen 2 werden dadurch nacheinander mit Unterdruck beaufschlagt, dass eine Ventileinrichtung 17, z.B. in Form einer Abdeckung, um die die Saugglocke 1 drehbar ist, nacheinander abhängig von der Drehung der Saugglocke 1 die Saugöffnungen 2 freigibt.

**Bezugszeichen**

| | |
|---|---|
| 1 Saugglocke | 10 Verstelleinrichtung |
| 2 Saugöffnung | 11 Führung |
| 3 Stutzen für Unterdruckquelle | 12 Pneumatikzylinder |
| 4 Rohr | 13 Druckgasleitung |
| 5 Anschlag | 14 Rückstellfeder |
| 6 Bewegungseinrichtung | 15 Justiereinrichtung |
| 7 Druckgasleitung | 16 Scheibe |
| 8 Verschluß | 17 Ventileinrichtung |
| 9 Auswerfer | |

## Patentansprüche

1. Sauggreifer zur Verwendung als Vereinzelungsvorrichtung für elastische Scheiben (16) von einem Scheibenstapel, mit einer Saugglocke (1) mit zumindest einer Saugöffnung (2) und mit einem gesteuert mit einer Druckgasquelle verbundenen Rohr (4), das zumindest bis in die Ebene der Saugöffnung (2) ragt, wobei die Saugglocke (1) gesteuert mit einer Unterdruckquelle verbunden ist, wobei das Rohr (4) die Ebene der Saugöffnung (2) um die Dicke einer Scheibe von 0,2 bis 10 mm überragt, **dadurch gekennzeichnet, dass** er eingerichtet ist, dass bei Beaufschlagung des Rohrs (4) mit Druckgas das Rohr (4) mittels einer Verstelleinrichtung (10) in eine Lage bewegt wird, in der die Mündung des Rohrs (4) über die Ebene der Saugöffnung (2) hinaus ragt und in Abwesenheit der Druckgasbeaufschlagung das Rohr (4) aus dieser Lage zurück bewegt wird.

2. Sauggreifer nach Anspruch 1, **gekennzeichnet durch** eine Bewegungseinrichtung (6), an der die Saugglocke (1) angebracht ist und die gesteuert ist, die Saugglocke (1) in eine erste Stellung zu bewegen und anschließend in eine zweite Stellung zu bewegen, und durch eine Steuerungseinheit, die eingerichtet ist, in einer ersten Stellung der Saugglocke (1) das Rohr (4) mit Druckgas zu beaufschlagen und die Saugglocke (1) mit Unterdruck zu beaufschlagen, die Saugglocke (1) bis in eine zweite Stellung mit Unterdruck zu beaufschlagen und in der zweiten Stellung den anliegenden Unterdruck aufzuheben.

3. Sauggreifer nach Anspruch 2, **dadurch gekennzeichnet, dass** die Steuerungseinheit eingerichtet ist, bei Bewegen der Saugglocke (1) aus der ersten Stellung das Rohr (4) nicht mit Druckgas zu beaufschlagen.

4. Sauggreifer nach einem der voranstehenden Ansprüche, **dadurch gekennzeichnet, dass** er eine Steuerungseinheit aufweist, die eingerichtet ist, das Rohr (4) mit Druckgas zu beaufschlagen und anschließend mit einer zeitlichen Verzögerung die Saugglocke (1) mit Unterdruck zu beaufschlagen.

5. Sauggreifer nach einem der voranstehenden Ansprüche, **dadurch gekennzeichnet, dass** er eine Steuerungseinheit aufweist, die eingerichtet ist, die Saugglocke (1) mit Unterdruck zu beaufschlagen und anschließend mit einer zeitlichen Verzögerung das Rohr (4) mit Druckgas zu beaufschlagen.

6. Sauggreifer nach einem der voranstehenden Ansprüche, **dadurch gekennzeichnet, dass** das Rohr (4) einen Anschlag (5) in der Ebene der Saugöffnung (2) aufweist und den Anschlag (5) um die Dicke zumindest einer oder genau einer Scheibe (16), z.B. um 0,2 bis 10 mm, überragt.

7. Sauggreifer nach einem der voranstehenden Ansprüche mit einem Träger zum Tragen eines Scheibenstapels, wobei der Träger in einer ersten Stellung angeordnet ist und die zweite Stellung davon beabstandet ist.

8. Sauggreifer nach einem der voranstehenden Ansprüche, **dadurch gekennzeichnet, dass** die Steuerungseinheit eingerichtet ist, in der ersten Stellung das Rohr (4) mit Druckgas zu beaufschlagen und anschließend die Saugglocke (1) mit Unterdruck zu beaufschlagen.

9. Sauggreifer nach einem der voranstehenden Ansprüche, **dadurch gekennzeichnet, dass** die Saugglocke (1) zumindest zwei Saugöffnungen (2) hat und eingerichtet ist, die Saugöffnungen (2) nacheinander mit Unterdruck zu beaufschlagen.

10. Sauggreifer nach Anspruch 9, **dadurch gekennzeichnet, dass** die Steuerungseinheit eingerichtet ist, die zumindest zwei Saugöffnungen (2) abhängig von der Bewegung der Bewegungseinrichtung (6) mit Unterdruck zu beaufschlagen.

11. Sauggreifer nach einem der voranstehenden Ansprüche, **dadurch gekennzeichnet, dass** die Saugglocke (1) zumindest anteilig ein Zylinder ist, in dessen Zylinderwand die zumindest eine Saugöffnung (2) angeordnet ist, wobei der Zylinder um seine Längsachse drehbar an der Bewegungseinrichtung (6) gelagert ist, die eingerichtet ist, den Zylinder senkrecht zu seiner Längsachse zu bewegen.

12. Sauggreifer nach Anspruch 11, **dadurch gekennzeichnet, dass** die Steuerungseinheit eingerichtet ist, die zumindest zwei Saugöffnungen (2) abhängig von der Drehung des Zylinders mit Unterdruck zu beaufschlagen.

13. Sauggreifer nach einem der voranstehenden Ansprüche, **dadurch gekennzeichnet, dass** die Mündung des Rohrs (4) abgeschrägt ist.

14. Sauggreifer nach einem der voranstehenden Ansprüche, **gekennzeichnet durch** einen manuell zu betätigenden Schalter, der eingerichtet ist, das Beaufschlagen des Rohrs mit Druckgas und das Beaufschlagen der Saugglocke mit Unterdruck auszulösen oder zu steuern.

15. Sauggreifer nach einem der voranstehenden Ansprüche, **gekennzeichnet dadurch, dass** die Verstelleinrichtung (10) ein Pneumatikzylinder ist, der gegen eine Feder wirkt und bei Beaufschlagung mit Druckgas das Rohr (4) verschiebt, bis dessen Mündung über die Ebene der der Saugöffnung (2) hinaus ragt.

16. Verfahren zum Vereinzeln elastischer Scheiben (16) von einem Scheibenstapel mit einem Sauggreifer nach einem der voranstehenden Ansprüche mit den Schritten Bewegen einer Saugglocke (1) mit deren zumindest einer Saugöffnung (2) in eine erste Stellung, in der die Saugöffnung (2) an dem Scheibenstapel anliegt,
in der ersten Stellung gesteuert Beaufschlagen eines Rohrs (4), das bis zumindest in die Ebene der Saugöffnung (2) ragt, mit Druckgas und Pressen von Druckgas in den Bereich, in dem zwei Scheiben (16) aneinander anliegen,
in der ersten Stellung Beaufschlagen der Saugglocke (1) mit Unterdruck und Bewegen der Saugglocke (1) in eine zweite Stellung, während die Saugglocke (1) bis zum Erreichen der zweiten Stellung mit Unterdruck beaufschl agt wird, und Aufheben des Unterdrucks in der zweiten Stellung.

17. Verfahren nach Anspruch 16, **dadurch gekennzeichnet, dass** das Rohr (4) die Ebene der Saugöffnung (2) überragt und beim Bewegen der Saugglocke (1) in die erste Stellung durch die oberste Scheibe (16) des Scheibenstapels bis an die nächste angrenzende Scheibe gestochen wird.

18. Verfahren nach einem der Ansprüche 16 bis 17, **dadurch gekennzeichnet, dass** die Saugglocke (1) zumindest zwei Saugöffnungen (2) aufweist und diese abhängig von der Stellung und/oder dem Bewegen der Saugglocke (1) gesteuert nacheinander mit Unterdruck beaufschlagt werden.

19. Verfahren nach einem der Ansprüche 16 bis 18, **dadurch gekennzeichnet, dass** die Saugglocke (1) zumindest anteilig ein Zylinder ist, in dessen Zylinderwand die zumindest eine Saugöffnung (2) angeordnet ist, und der Zylinder um seine Längsachse gedreht wird, während er mittels einer Bewegungseinrichtung senkrecht zu seiner Längsachse entlang der ersten Stellung bewegt wird.

20. Verfahren zur Herstellung eines Lebensmittels, **gekennzeichnet durch** das Verfahren nach einem der Ansprüche 16 bis 19, bei dem die Scheibe (16) Teil eines zusammengesetzten Lebensmittels wird.

## Claims

1. Suction gripper for use as a separation device for elastic disks (16) from a disk stack, the suction gripper having a suction cup (1) with at least one suction opening (2) and having a pipe (4) that is controllably connected to a pressurized gas source and that extends at least into the plane of the suction opening (2), wherein the suction cup (1) is controllably connected to a vacuum source, wherein the pipe (4) extends beyond the plane of the suction opening (2) by the thickness of a disk of 0.2 to 10 mm, **characterized in that** the suction gripper is configured so that upon application of pressurized gas to the pipe (4), the pipe (4) by means of an adjusting unit (10) is moved into a position in which the mouth of the pipe (4) extends beyond the plane of the suction opening (2) and the pipe (4) is moved back out of this position in the absence of pressurized gas application.

2. Suction gripper according to claim 1, **characterized by** a moving device (6) to which the suction cup (1) is attached and which is controlled to move the suction cup (1) into a first position and to subsequently move the suction cup (1) into a second position, and by a control unit that is configured to apply pressurized gas to the pipe (4) and to apply vacuum to the suction cup (1) in a first position of the suction cup (1), to apply vacuum to the suction cup (1) until in a second position and to relieve the applied vacuum in the second position.

3. Suction gripper according to claim 2, **characterized in that** the control unit is configured to not apply pressurized gas onto the pipe (4) upon moving of the suction cup (1) out of the first position.

4. Suction gripper according to one of the preceding claims, **characterized by** having a control unit that is configured to apply pressurized gas onto the pipe (4) and to subsequently apply vacuum to the suction cup (1) following a time delay.

5. Suction gripper according to one of the preceding claims, **characterized by** having a control unit that is configured to apply vacuum to the suction cup (1) and to subsequently apply pressurized gas to the pipe (4) following a time delay.

6. Suction gripper according to one of the preceding claims, **characterized in that** the pipe (4) has a limit stop (5) in the plane of the suction opening (2) and **in that** the pipe (4) extends beyond the limit stop (5) by the thickness of at least one or exactly one disk (16), e.g. by 0.2 to 10 mm.

7. Suction gripper according to one of the preceding claims having a carrier to carry a disk stack, wherein the carrier is arranged in a first position and the second position is spaced apart from it.

8. Suction gripper according to one of the preceding claims, **characterized in that** the control unit is configured to apply pressurized gas to the pipe (4) in the first position and to subsequently apply vacuum to the suction cup (1).

9. Suction gripper according to one of the preceding claims, **characterized in that** the suction cup (1) has at least two suction openings (2) and is configured to consecutively apply vacuum to the suction openings (2).

10. Suction gripper according to claim 9, **characterized in that** the control unit is configured to apply vacuum to the at least two suction openings (2) depending on the movement of the moving device (6).

11. Suction gripper according to one of the preceding claims, **characterized in that** the suction cup (1) at least in part is a cylinder, in the cylinder wall of which the at least one suction opening (2) is arranged, wherein the cylinder is mounted rotatably about its longitudinal axis on the moving device (6) that is configured to move the cylinder perpendicularly to its longitudinal axis.

12. Suction gripper according to claim 11, **characterized in that** the control unit is configured to apply vacuum to the at least two suction openings (2) depending on the rotation of the cylinder.

13. Suction gripper according to one of the preceding claims, **characterized in that** the mouth of the pipe (4) is beveled.

14. Suction gripper according to one of the preceding claims, **characterized by** a manually operated switch that is configured to trigger or control the application of pressurized gas to the pipe (4) and the application of vacuum to the suction cup (1).

15. Suction gripper according to one of the preceding claims, **characterized in that** the adjusting unit (10) is a pneumatic cylinder that acts against a spring and that upon application of pressurized gas moves the pipe (4) until its mouth extends beyond the plane of the suction opening (2).

16. Process for the separation of elastic disks (16) from a disk stack with a suction gripper according to one of the preceding claims having the steps of
moving a suction cup (1) with its at least one suction opening (2) into a first position, in which the suction opening (2) lies adjacent to the disk stack,
in the first position, controlled application of pressurized gas to a pipe (4) that extends at least into the plane of the suction opening (2) and pressing of pressurized gas into the area in which two disks (16) lie adjacent to one another,
in the first position, applying vacuum to the suction cup (1) and moving the suction cup (1) into a second position, while vacuum is applied to the suction cup (1) until the second position is reached, and
relieving the vacuum in the second position.

17. Process according to claim 16, **characterized in that** the pipe (4) extends beyond the plane of the suction opening (2) and is pierced through the top-most disk (16) of the disk stack up to the next adjacent disk (16) upon movement of the suction cup (1) into the first position.

18. Process according to one of claims 16 to 17, **characterized in that** the suction cup (1) has at least two suction openings (2) and **in that** these are consecutively applied with vacuum in a controlled manner depending on the position and/or the movement of the suction cup (1).

19. Process according to one of claims 16 to 18, **characterized in that** the suction cup (1) at least in part is a cylinder, in the cylinder wall of which the at least one suction opening (2) is arranged, and **in that** the cylinder is rotated about its longitudinal axis while being moved perpendicularly to its longitudinal axis along the first position by means of a moving device.

20. Process for the production of a food, **characterized by** the process according to one of claims 16 to 19, in which the disk (16) becomes part of a composed food.

## Revendications

1. Une ventouse de préhension pour utilisation en tant que dispositif de séparation de tranches élastiques (16) d'une pile de tranches, comportant une cloche d'aspiration (1) avec au moins une ouverture d'aspiration (2) et avec un tuyau (4) relié de façon commandée à une source de gaz comprimé, lequel saillit au moins jusqu'à dans le plan de l'ouverture d'aspiration (2), la cloche d'aspiration (1) étant reliée à une source de dépression de façon commandée, le tuyau (4) dépassant le plan de l'ouverture d'aspiration (2) de l'épaisseur d'une tranche de 0,2 à 10 mm, **caractérisée en ce qu'**elle est adaptée de façon que, quand le tuyau (4) est mis sous pression avec du gaz comprimé, le tuyau (4) est déplacé au moyen d'un appareil d'ajustement (10) dans une position dans laquelle l'embouchure du tuyau (4) dépasse le plan de l'ouverture d'aspiration (2) et, en l'absence de la mise sous pression avec du gaz comprimé, le tuyau (4) est retiré de cette position.

2. La ventouse de préhension selon la revendication 1, **caractérisée par** un appareil de déplacement (6), auquel la cloche d'aspiration (1) est montée et qui est commandé pour déplacer la cloche d'aspiration (1) dans une première position et ensuite dans une deuxième position, et par une unité de commande adaptée à mettre le tuyau (4) sous pression avec du gaz comprimé et mettre la cloche d'aspiration (1) sous dépression dans une première position de la cloche d'aspiration (1), à mettre la cloche d'aspiration (1) sous dépression jusqu'à dans une deuxième position et à faire cesser la dépression présente dans la seconde position.

3. La ventouse de préhension selon la revendication 2, **caractérisée en ce que** l'unité de commande est adaptée à ne pas mettre le tuyau sous pression avec du gaz comprimé quand la cloche d'aspiration (1) est retirée de la première position.

4. La ventouse de préhension selon l'une des revendications précédentes, **caractérisée en ce qu'**elle présente une unité de commande adaptée à mettre le tuyau (4) sous pression avec du gaz comprimé et ensuite à mettre la cloche d'aspiration (1) sous dépression après un temps de retard.

5. La ventouse de préhension selon l'une des revendications précédentes, **caractérisée en ce qu'**elle présente une unité de commande adaptée à mettre la cloche d'aspiration (1) sous dépression et ensuite à mettre le tuyau (4) sous pression avec du gaz comprimé après un temps de retard.

6. La ventouse de préhension selon l'une des revendications précédentes, **caractérisée en ce que** le tuyau (4) présente une butée (5) dans le plan de l'ouverture d'aspiration (2) et dépasse la butée (5) de l'épaisseur d'au moins une ou précisément d'une tranche (16), p. ex. de 0,2 à 10 mm.

7. La ventouse de préhension selon l'une des revendications précédentes, comportant un support pour supporter une pile de tranches, le support étant disposé dans une première position et la deuxième position étant à une distance de celle-ci.

8. La ventouse de préhension selon l'une des revendications précédentes, **caractérisée en ce que** l'unité de commande est adaptée à mettre le tuyau (4) sous pression avec du gaz comprimé dans la première position et ensuite à mettre la cloche d'aspiration (1) sous dépression.

9. La ventouse de préhension selon l'une des revendications précédentes, **caractérisée en ce que** la cloche d'aspiration (1) a au moins deux ouvertures d'aspiration (2) et est adaptée à mettre successivement les ouvertures d'aspiration (2) sous dépression.

10. La ventouse de préhension selon la revendication 9, **caractérisée en ce que** l'unité de commande est adaptée à mettre au moins deux ouvertures d'aspiration (2) sous dépression en fonction du mouvement de l'appareil de déplacement (6).

11. La ventouse de préhension selon l'une des revendications précédentes, **caractérisée en ce que** la cloche d'aspiration (1) est au moins proportionnellement un cylindre, dans la paroi cylindrique duquel l'au moins une ouverture d'aspiration (2) est disposée, le cylindre étant monté de façon rotative autour de son axe longitudinal à l'appareil de déplacement (6), qui est adapté à déplacer le cylindre perpendiculairement à son axe longitudinal.

12. La ventouse de préhension selon la revendication 11, **caractérisée en ce que** l'unité de commande est adaptée à mettre au moins deux ouvertures d'aspiration (2) sous dépression en fonction de la rotation du cylindre.

13. La ventouse de préhension selon l'une des revendications précédentes, **caractérisée en ce que** l'embouchure du tuyau (4) est en biais.

14. La ventouse de préhension selon l'une des revendications précédentes, **caractérisée par** un interrupteur à actionner manuellement, qui est adapté à déclencher ou commander la mise sous pression du tuyau avec du gaz comprimé et la mise sous dépression de la cloche d'aspiration.

15. La ventouse de préhension selon l'une des revendications précédentes, **caractérisée en ce que** l'appareil d'ajustement (10) est un cylindre pneumatique, qui agit contre un ressort et, quand il est mis sous pression avec du gaz comprimé, repousse le tuyau (4) jusqu'à ce que son embouchure dépasse le plan de l'ouverture d'aspiration (2).

16. Procédé pour la séparation de tranches élastiques (16) d'une pile de tranches avec une ventouse de préhension selon l'une des revendications précédentes, comportant les étapes déplacement d'une cloche d'aspiration (1) avec son au moins une ouverture d'aspiration (2) dans une première position dans laquelle l'ouverture d'aspiration (2) est contiguë à la pile de tranches, mise sous pression d'un tuyau (4) de façon commandée avec du gaz comprimé dans cette première position, le tuyau saillant jusqu'au moins dans le plan de l'ouverture d'aspiration (2), et pression de gaz comprimé dans la zone dans laquelle deux tranches (16) sont contiguës, mise sous dépression de la cloche d'aspiration (1) dans la première position et déplacement de la cloche d'aspiration (1) dans une deuxième position, tandis que la cloche d'aspiration (1) est mise sous dépression jusqu'à ce que la deuxième position soit atteinte, et cession de la dépression dans la deuxième position.

17. Procédé selon la revendication 16, **caractérisé en ce que** le tuyau (4) dépasse le plan de l'ouverture d'aspiration (2) et, pendant le déplacement de la cloche d'aspiration (1) dans la première position, est enfoncé à travers la tranche (16) supérieure de la pile de tranches jusqu'à dans la tranche prochaine attenante.

18. Procédé selon l'une des revendications 16 à 17, **caractérisé en ce que** la cloche d'aspiration (1) présente au moins deux ouvertures d'aspiration (2) et celles-ci sont successivement mises sous dépression de façon commandée en fonction de la position et/ou du déplacement de la cloche d'aspiration (1).

19. Procédé selon l'une des revendications 16 à 18, **caractérisé en ce que** la cloche d'aspiration (1) est au moins proportionnellement un cylindre, dans la paroi cylindrique duquel l'au moins une ouverture d'aspiration (2) est disposée, et le cylindre est tourné autour de son axe longitudinal, tandis qu'il est déplacé le long de la première position perpendiculairement à son axe longitudinal au moyen d'un appareil de déplacement.

20. Procédé de fabrication d'un aliment **caractérisé par** le procédé selon l'une des revendications 16 à 19, dans lequel la tranche (16) devient partie d'un aliment composé.
